# EUROPEAN PATENT SPECIFICATION

(11) **EP 1 493 940 B1**
(45) Date of publication and mention of the grant of the patent: **12.09.2007**
(21) Application number: 03077106.7
(22) Date of filing: 03.07.2003
(51) Int. Cl.: F16F 9/43, F17C 5/06

(54) **Method and apparatus for charging and closing a tube**
Methode und Vorrichtung zum Laden und Schliessen eines Rohres
Méthode et dispositif pour le chargement et fermeture d'un tube

(43) Date of publication of application: 05.01.2005
(73) Proprietor: Delphi Technologies, Inc., Troy, MI 48007 (US)
(72) Inventor: Arenas, Jose M., 11500 El Puerto de Santa Maria (ES); Hernandez, Carlos Andres, 11500 El Puerto de Santa Maria (ES)
(74) Representative: Denton, Michael John

(56) References cited:
- DE-A- 2 455 901
- JP-A- 51 122 818
- US-A- 5 524 871
- US-B2- 6 581 651

## Description

### Technical Field

The present invention relates to a method and apparatus for charging a tube with pressurised fluid, and at least partially closing the tube. The present invention has particular application in the assembly of a hydraulic damper containing pressurised gas.

### Background of the Invention

Hydraulic dampers, as used in the suspension system of a motor vehicle, for example, are well known. In general terms, the damper consists of a tube; a piston mounted inside the tube and capable of sliding movement in an axial direction; a rod guide closing one end of the tube; hydraulic fluid in the chambers on either side of the piston; and a piston rod secured to the piston and extending, in the axial direction, through one of the chambers and the rod guide. In some cases, the damper includes an additional outer tube, coaxial with the inner tube. In such a case, the chamber between the inner and outer tubes may be charged with pressurised gas. Several methods for charging the damper with the pressurised gas are known, including forcing pressurised gas passed a double lip seal positioned between the piston rod and the rod guide, as described in GB-A-2287291. Because of the lack of compliance of the inner lip seal, this method is inefficient and requires excessive gas pressure in order to charge the damper.

### Summary of the Invention

The present invention aims to provide a method and apparatus which overcomes the above mentioned disadvantages.

A method, in accordance with the present invention, of charging a tube, which is closed at one end and open at the other end, with pressurised fluid and at least partially closing the open end of the tube, is characterised by the features specified in Claim 1.

Apparatus in accordance with the present invention, for charging a tube, which is closed at one end and open at the other end, with pressurised fluid and at least partially closing the open end of the tube, is characterised by the features specified in Claim 9.

The method and apparatus in accordance with the present invention provides means for charging and at least partially closing a tube at a single workstation, at a lower fluid pressure than previously known arrangements, with reduced fluid loss, in a simple and easy process.

### Brief Description of the Drawings

The present invention will now be described, by way of example, with reference to the accompanying drawings, in which:-
Figure 1 is a schematic cross-sectional view of a hydraulic damper which has been charged and partially closed using the method and apparatus of the present invention;
Figure 2 is a side view, partly in cross-section, of apparatus in accordance with the present invention for carrying out the method of the present invention;
Figure 3 is a top view of the clamping means of the apparatus of Figure 2;
Figure 4 is an enlarged cross-sectional view of the clamping means and die of the apparatus of Figure 2 during gas charging, on the line IV-IV of Figure 3;
Figure 5 is an enlarged cross-sectional view of the clamping means and die of the apparatus of Figure 2 during closing, on the line V-V of Figure 3;
Figure 6 is an enlarged cross-sectional view of the open end of the hydraulic damper during gas-charging; and
Figure 7 is an enlarged cross-sectional view of the open end of the hydraulic damper after partial closing.

### Description of the Preferred Embodiment

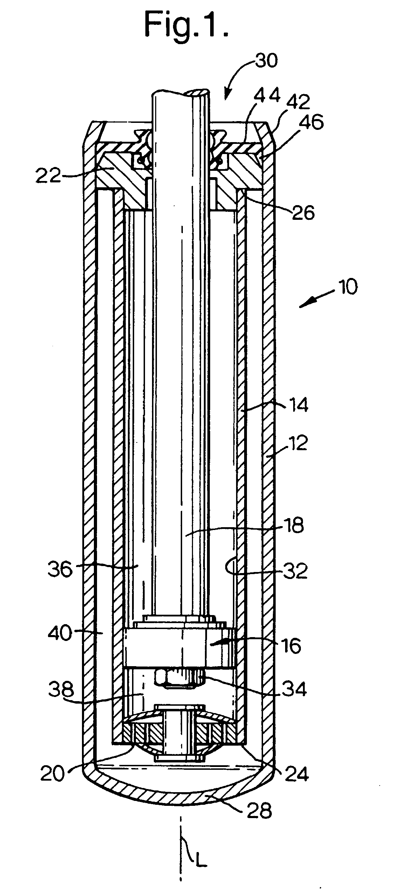

Figure 1 shows a hydraulic damper 10 for the suspension system of a motor vehicle. The damper 10 is of the twin-tube type and comprises an outer tube 12, an inner tube 14 substantially coaxial with the outer tube on an axis L, a piston assembly 16, a piston rod 18 having a longitudinal axis on axis L, a compensation valve 20, a rod guide 22, and an elastomeric annular seal 44 having an outer raised edge 46. The piston assembly 16 and the compensation valve 20 may be any suitable conventional design well known to those skilled in the art, and will not be described in detail. The inner tube 14 is substantially closed at one end 24 by the compensation valve 20, and is substantially closed at the other end 26 by the rod guide 22 and annular seal 44. The outer tube 12 is closed at one end 28 by an integral formation of the outer tube walls, and is partially closed at the other end 30 (the open end) by the rod guide 22, the annular seal 44, and by the inwardly deformed or bent-over portion 42 of the open end of the outer tube. The piston rod 18 extends through, and makes a sealing sliding fit with the rod guide 22 and the annular seal 44. The piston assembly 16 makes a sealing sliding fit with the inner surface 32 of the inner tube 14. The piston rod 18 is secured to the piston assembly 16 by a nut 34 or any other suitable means. The piston assembly 16 divides the inner area of the inner tube 14 into a rebound chamber 36 and a compression chamber 38. The area between the inner tube 14 and the outer tube 12 defines a compensation chamber 40. The rebound and compression chambers 36 and 38 are substantially filled with hydraulic fluid to damp reciprocating movement of the piston assembly 16 and piston rod 18 along axis L relative to the outer and inner tubes 12 and 14. The compensation chamber 40 is partly filled with hydraulic fluid and acts as a reservoir for the hydraulic fluid in the rebound and compression chambers 36 and 38. The compression chamber 40 is also charged with pressurised gas in order to improve damping dynamic performance and reduce noise. The hydraulic damper 10 may be subject to further assembly steps, such as the further bending over of the portion 42 of the open end 30 of the outer tube 12. The hydraulic damper 10, after assembly is complete, is mounted in a motor vehicle (not shown) in the standard manner.

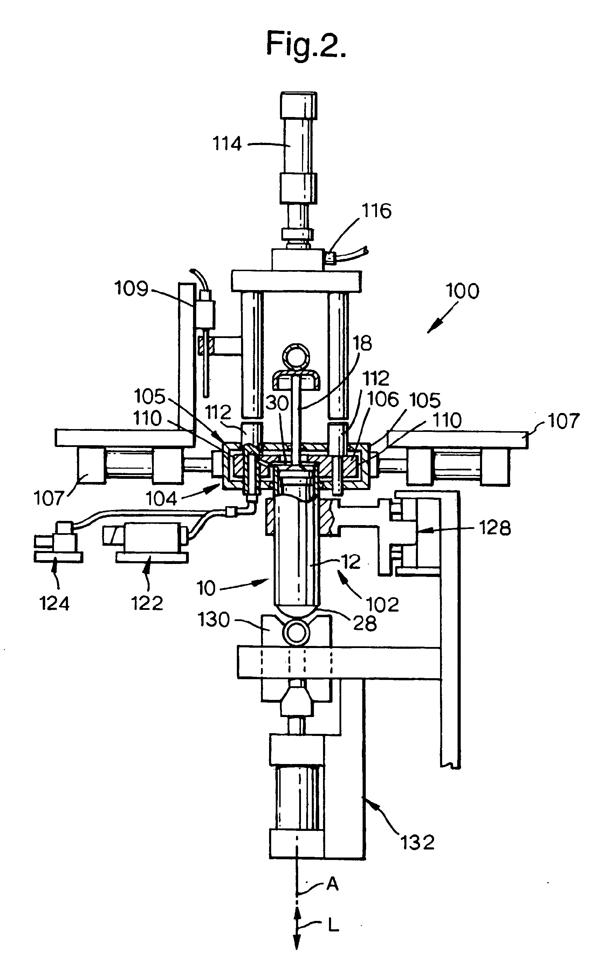

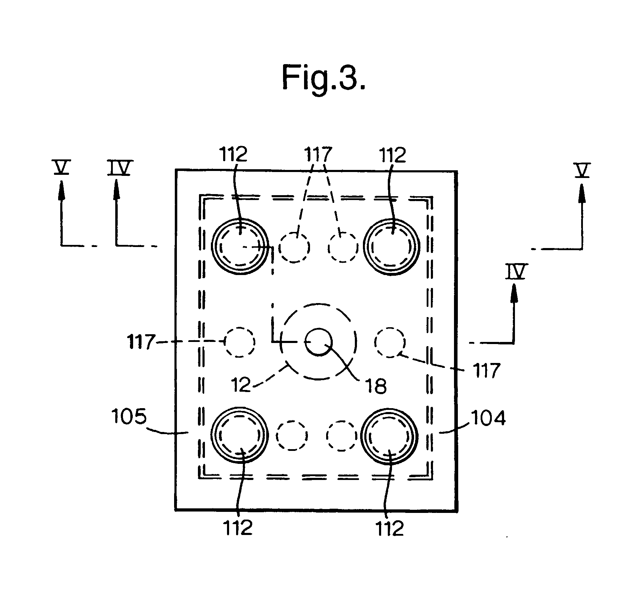

Referring to Figures 2 to 5, the apparatus 100 in accordance with the present invention comprises a workstation 102 with clamping means 104 at the workstation. The clamping means 104 has an internal cavity 106 defined by a pair of movable jaws 105. The clamping means 104 secures the damper 10 at the workstation 102. The jaws 105 of the clamping means 104 are movable by hydraulic rams 107 in a radial direction X which is substantially perpendicular to the axis L of the damper 10. The jaws 105 of the clamping means 104 provide a sealing fit with the piston rod 18, and around the open end 30 of the outer tube 12, by way of seals 108 which substantially close and seal the internal cavity 106 around the open end of the outer tube when the damper 10 is secured at the workstation 102. A movement sensor 109 detects and controls the operation of the hydraulic rams 107, and hence the movement of the jaws 105 of the clamping means 104.

A pair of dies 110 are positioned inside the cavity 106 of the clamping means 104. Each die 110 is mounted on a guide rod 112. The guide rods 112 extend through the cavity 106 in an axial direction Y substantially parallel to axis L of the damper 10. The guide rods 112, and the dies 110, are capable of movement in the axial direction Y relative to the clamping means 104 and the damper 10. The dies 110 have a surface 111 which engages the outer tube 12 of the damper 10. The surface 111 has a predetermined shape dependent on the required deformation of the open end 30 of the outer tube 12 during the (partial) closing of the open end of the outer tube. A hydraulic cylinder 114 engages the guide rods 112 for moving the guide rods and dies 110 in the axial direction Y towards the closed end 28 of the outer tube 12 of the damper 10 during the closing step. A load cell 116 detects the force exerted by the hydraulic cylinder 114 on the guide rods 112. Movement of the dies 110 and guide rods 112 in the opposite direction (to that caused by the hydraulic cylinder 114) is either by internal biasing forces, or by springs 117 positioned between, and acting on, the clamping means 104 and the dies 110 and/or the guide rods 112.

A gas inlet pipe 118 is connected to a through bore 120 formed in one of the guide rods 112. The through bore 120 opens into the internal cavity 106 of the clamping means 104 adjacent the open end 30 of the outer tube 12 of the damper 10. The gas inlet pipe 118 is connected to a source of pressurised gas by way of a control valve 122 for the introduction of pressurised gas into the cavity 106, into the open end 30 of the outer tube 12, between the rod guide 22 and the outer tube 12, and hence into the compensation chamber 40 of the damper 10. A pressure transducer 124 is connected to a pressure sensor 126 mounted on the other guide rod 112, and controls the operation of the control valve 122 dependent on the sensed gas pressure in the cavity 106.

The apparatus 100 may also include a transport clamp 128 which grips the damper 10 and moves the damper to and from the workstation 102. The workstation 102 also preferably includes a platform 130 on which the closed end 28 of the outer tube 12 rests, and which is movable in the axial direction Y by a ram 132.

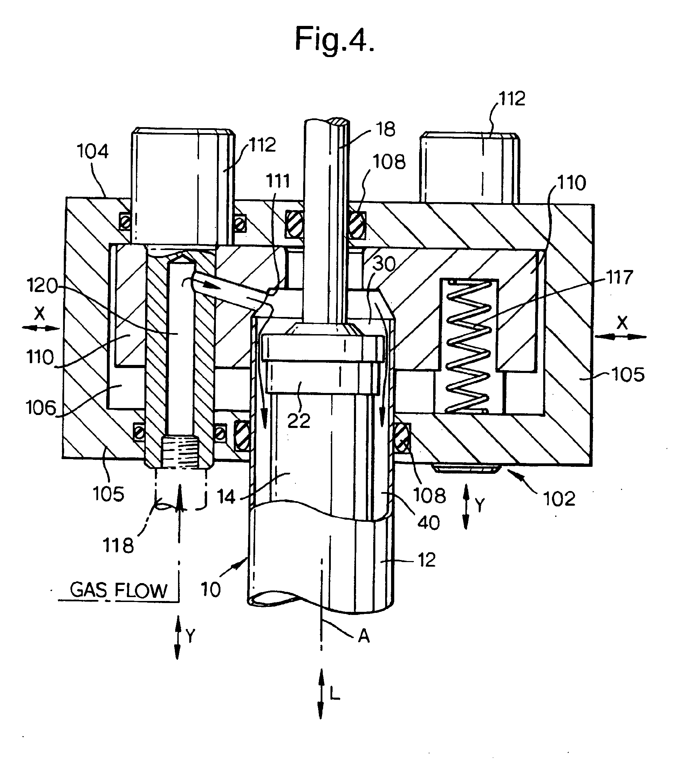

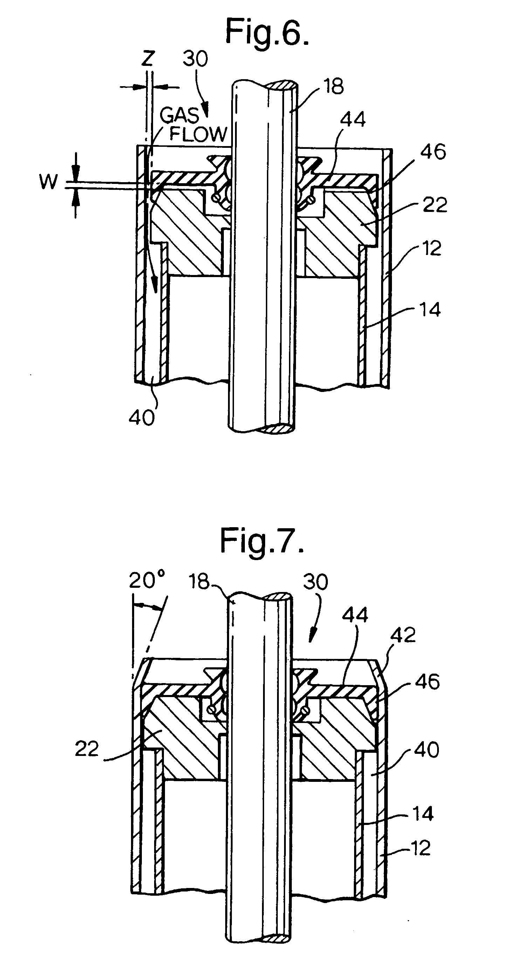

In accordance with the method of the present invention, the damper 10 is positioned at the workstation 102. As shown in Figure 4, the jaws 105 of the clamping means 104 are moved in the radial direction X by the hydraulic rams 107 into engagement with the piston rod 18 and the outer tube 12 of the damper 10. The seals 108 seal the internal cavity 106 of the clamping means 104. The control valve 122 is then opened to allow pressurised gas to the enter the cavity 106 of the clamping means 104 by way of the inlet pipe 118 and the through bore 120. The pressurised gas in the cavity 106 passes through the open end 30 (Figure 6) of the outer tube 12 and enters the compensation chamber 40 of the damper 10 through a small radial clearance Z between the outer tube 12 and the outer circumferencial surfaces of the rod guide 22 and the raised edge 46 of the annular seal 44. When a predetermined gas pressure is determined by the pressure sensor 126, the control valve 122 is closed to cease the introduction of pressurised gas into the damper 10.

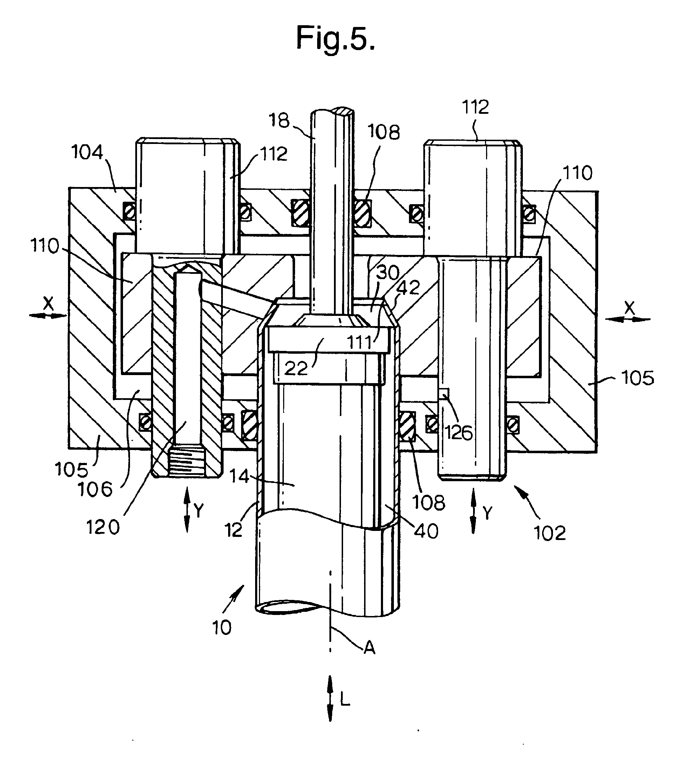

Next, as shown in Figure 5, the hydraulic cylinder 114 is actuated to move the guide rods 112 and dies 110 in the axial direction Y, relative to the damper 10, towards the closed end 28 of the outer tube 12. The surface 111 of each die 110 deforms the open end 30 of the outer tube 12 to inwardly bend the open end of the outer tube through an angle of at least 20 degrees, thereby forming the bent-over portion 42 of the outer tube (Figure 7). The deformation of the open end 30 of the outer tube 12 closes any axial gap W between the annular seal 44 and the rod guide 22, and also compresses the raised edge 46 between the rod guide and the outer tube to seal closed the open end of the damper 10 and the compensation chamber 40. The load cell 116 monitors and controls the force exerted by the hydraulic cylinder 114, and hence the force exerted by the dies 110 on the outer tube 12.

After the deformation of the open end 30 of the outer tube 12, the hydraulic cylinder 114 and the hydraulic rams 107 are de-actuated, and the jaws 105 of the clamping means 104 are disengaged from the damper 10. The damper 10 is then moved from the workstation 102 for any required further assembly steps.

In the above described arrangement, the clamping means 104 comprises a pair of jaws 105. It will be appreciated that the clamping means may alternatively comprise a single jaw (movable axially rather than radially), or three or more jaws, or may be any other suitable arrangement. Similarly, in the above described arrangement, the pair of dies 110 may be replaced by a single die, or by three or more dies. In an alternative arrangement, the gas inlet pipe 118 may open though one of the jaws 105 directly into the internal cavity 106, rather than connect with a through bore 120 in one of the guide rods 112. In a further alternative, the time for gas charging may be monitored rather than the gas pressure in the internal cavity, in which case, gas charging is ceased after a predetermined time.

In the preferred arrangement described above, the portion 42 of the open end 30 of the outer tube 12 is bent through an angle of at least 20 degrees. It will be appreciated that other angles may be chosen (with appropriate changes required to the shape of the surface 111 of the dies 110) to provide any suitable angle from 10 degrees up to 90 degrees. As a further alternative, rather than bending the full circumference of the open end 30 of the outer tube 12, a number (for example, three) of indentations could be formed in the open end of the outer tube to secure the rod guide 22 in the outer tube 12.

Although the present invention has been described in relation to the assembly of a hydraulic damper, it will be appreciated that the method and apparatus may be used for other types of tube which are closed at one end, where there is a need to charge the tube with pressurised fluid through the open end of the tube, and then at least partially closing the open end.

The present invention has the advantage that a tube may be charged with pressurised fluid and then at least partially closed at a single workstation. Compared to known gas charging for hydraulic dampers, a lower charging pressure may be used, with reduced loss of gas. The gas-charging step is easier to control, and the cycle time for the process as a whole can be reduced.

## Claims

1. A method of charging a tube (12), which is closed at one end (28) and open at the other end (30), with pressurised fluid and at least partially closing the open end of the tube, comprising the sequential steps of:
(a) positioning the tube at a workstation (102), the workstation including clamping means (104, 105) having an internal cavity (106) with at least one die (110) therein capable of movement in the axial direction of the tube;
(b) sealing the cavity of the clamping means around the open end of the tube;
(c) introducing pressurised fluid through an inlet pipe (118) into the cavity in the clamping means such that the pressurised fluid enters the tube through the open end thereof;
(d) ceasing the introduction of pressurised fluid either after a predetermined period of time, or when a predetermined fluid pressure is determined in the tube;
(e) moving the at least one die in an axial direction relative to the tube towards the closed end of the tube to engage and inwardly deform at least a portion of the open end of the tube;
(f) releasing the clamping means from the tube; and
(g) removing the tube from the workstation.

2. A method as claimed in Claim 1, in which the clamping means comprise two or more jaws (105), wherein the sealing step comprises moving the jaws in a direction substantially perpendicular to the axis of the tube (12) to clamp the jaws around the open end (30) of the tube, and to seal the internal cavity (102) around the open end of the tube.

3. A method as claimed in Claim 1 or Claim 2, wherein the introducing step and the ceasing step are performed by a control valve (122) connected to a source of pressurised fluid.

4. A method as claimed in any one of Claims 1 to 3, wherein the moving step is performed by a hydraulic cylinder (114) engaging the one or more dies (110).

5. A method as claimed in any one of Claims 1 to 4, wherein the moving step inwardly deforms the open end (30) of the tube (12) around the total circumference of the open end.

6. A method as claimed in Claim 5, wherein the moving step inwardly deforms the open end (30) of the tube (12) by bending the open end through an angle of at least 20 degrees.

7. A method as claimed in any one of Claims 1 to 4, wherein the moving step inwardly deforms the open end (30) of the tube (12) at predetermined positions to form indentations in the tube around the open end thereof.

8. A method as claimed in any one of Claims 1 to 7, wherein the tube (12) is the outer tube of a hydraulic damper (10), the hydraulic damper also having a coaxial inner tube (14), the chamber (40) between the inner and outer tubes being charged with pressurised fluid.

9. Apparatus (100) for charging a tube (12), which is closed at one end (28) and open at the other end (30), with pressurised fluid and at least partially closing the open end of the tube, comprising:
(a) a workstation (102);
(b) clamping means (104,105) at the workstation, the clamping means having an internal cavity (106) being capable of providing a sealed fit around the open end of the tube;
(c) at least one die (110) inside the cavity of the clamping means and capable of movement in the axial direction of the tube;
(d) an inlet pipe (118) connected to the cavity of the clamping means;
(e) means (122) for the introducing pressurised fluid into the cavity through the inlet pipe and thereby into the open end of the tube;
(f) means (122,124) for ceasing the introduction of pressurised fluid either after a predetermined period of time is determined, or when a predetermined fluid pressure is determined in the tube; and
(g) means (114, 112) for moving the at least one die in an axial direction relative to the tube towards the closed end of the tube to engage and inwardly deform at least a portion of the open end of the tube.

10. Apparatus as claimed in Claim 9, wherein the clamping means comprises at least two jaws (105), the jaws being movable in a direction substantially perpendicular to the axis of the tube (12) to clamp the jaws around the open end (30) of the tube, and to seal the internal cavity (106) around the open end of the tube.

11. Apparatus as claimed in Claim 10, further comprising a hydraulic ram (107) engageable with each jaw (105) for moving the jaws in the direction substantially perpendicular to the axis of the tube (12).

12. Apparatus as claimed in any one of Claims 9 to 11, comprising at least two dies (110) inside the internal cavity (106) of the clamping means (104,105).

13. Apparatus as claimed in any one of Claims 9 to 12, wherein the or each die (110) is mounted on a guide rod (112), the or each guide rod extending through the clamping means (104,105) and having an axis substantially perpendicular to the axis of the tube (12).

14. Apparatus as claimed in any one of Claims 9 to 13, wherein the means for moving the or each die (110) in the axial direction relative to the tube (12) towards the closed end (28) of the tube comprises a hydraulic cylinder (114).

15. Apparatus as claimed in any one of Claims 9 to 14, wherein the or each die (110) is biased away from the closed end (28) of the tube (12).

16. Apparatus as claimed in any one of Claims 9 to 15, wherein inlet pipe (118) is connected to a through bore (120) in the or one of the dies (110).

17. Apparatus as claimed in Claim 16, in which the or each die (110) is mounted on a guide rod (112), wherein the through bore (120) is in one of the guide rods.

18. Apparatus as claimed in any one of Claims 9 to 17, wherein the means for introducing pressurised fluid, and the means for ceasing the introduction of pressurised fluid, is a control valve (122).

19. Apparatus as claimed in Claim 18, further comprising a pressure sensor (126) positioned in the internal cavity (106); and a pressure transducer (124) connected to the pressure sensor and to the control valve (122); wherein the pressure transducer closes the control valve when the pressure sensor detects a predetermined fluid pressure in the cavity.

## Patentansprüche

1. Verfahren zum Laden eines Rohrs (12), das an einem Ende (28) verschlossen und am anderen Ende (30) offen ist, mit Druckmittel und wenigstens teilweisen Verschließen des offenen Endes des Rohrs, welches folgende sequentielle Schritte aufweist:
(a) Positionieren des Rohrs an einer Bearbeitungsstation (102), wobei die Bearbeitungsstation Klemmmittel (104, 105) mit einem inneren Hohlraum (106) umfasst, wobei wenigstens ein Stempel (110) darin zur Bewegung in axialer Richtung des Rohrs in der Lage ist;
(b) Abdichten des Hohlraums der Klemmmittel um das offene Ende des Rohrs;
(c) Einbringen von Druckmittel durch ein Einlassrohr (118) in den Hohlraum in den Klemmmitteln, so daß das Druckmittel in das Rohr durch dessen offenes Ende eintritt;
(d) Beenden des Einbringens von Druckmittel entweder nach einem vorbestimmten Zeitraum, oder wenn ein vorbestimmter Fluiddruck in dem Rohr bestimmt wird;
(e) Bewegen des wenigstens einen Stempels in einer axialen Richtung relativ zu dem Rohr zu dem verschlossenen Ende des Rohrs hin, um an wenigstens einem Abschnitt des offenen Endes des Rohrs anzugreifen und ihn nach innen zu verformen;
(f) Lösen der Klemmmittel von dem Rohr; und
(g) Entnehmen des Rohrs aus der Bearbeitungsstation.

2. Verfahren nach Anspruch 1, bei welchem die Klemmmittel zwei oder mehr Backen (105) aufweisen, wobei der Abdichtungsschritt aufweist, dass die Backen in einer Richtung im wesentlichen senkrecht zu der Achse des Rohrs (12) bewegt werden, um die Backen um das offene Ende (30) des Rohrs zu klemmen und den inneren Hohlraum (106) um das offene Ende des Rohrs abzudichten.

3. Verfahren nach Anspruch 1 oder Anspruch 2, bei welchem der Einbringschritt und der Beendigungsschritt von einem mit einer Druckmittelquelle verbundenen Steuerventil (122) durchgeführt werden.

4. Verfahren nach einem der Ansprüche 1 bis 3, bei welchem der Bewegungsschritt von einem Hydraulikzylinder (114) durchgeführt wird, der an dem einen oder den mehreren Stempeln (110) angreift.

5. Verfahren nach einem der Ansprüche 1 bis 4, bei welchem der Bewegungsschritt das offene Ende (30) des Rohrs (12) um den Gesamtumfang des offenen Endes nach innen verformt.

6. Verfahren nach Anspruch 5, bei welchem der Bewegungsschritt das offene Ende (30) des Rohrs (12) nach innen verformt, indem das offene Ende über einen Winkel von wenigstens 20 Grad gebogen wird.

7. Verfahren nach einem der Ansprüche 1 bis 4, bei welchem der Bewegungsschritt das offene Ende (30) des Rohrs (12) an vorbestimmten Positionen nach innen verformt, um Einkerbungen in dem Rohr um dessen offenes Ende herum zu bilden.

8. Verfahren nach einem der Ansprüche 1 bis 7, bei welchem das Rohr (12) das äußere Rohr eines hydraulischen Stoßdämpfers (10) ist, wobei der hydraulische Stoßdämpfer auch ein koaxiales inneres Rohr (14) aufweist und die Kammer (40) zwischen dem inneren und dem äußeren Rohr mit Druckmittel geladen wird.

9. Vorrichtung (100) zum Laden eines Rohrs (12), das an einem Ende (28) verschlossen und am anderen Ende (30) offen ist, mit Druckmittel und wenigstens teilweisen Verschließen des offenen Endes des Rohrs, welche folgendes aufweist:
(a) eine Bearbeitungsstation (102);
(b) Klemmmittel (104, 105) an der Bearbeitungsstation, wobei die Klemmittel einen inneren Hohlraum (106) haben, der in der Lage ist, eine Versiegelungspassung um das offene Ende des Rohrs herum vorzusehen;
(c) wenigstens einen Stempel (110) innerhalb des Hohlraums der Klemmmittel, der zur Bewegung in axialer Richtung des Rohrs in der Lage ist;
(d) ein mit dem Hohlraum der Klemmmittel verbundenes Einlassrohr (118);
(e) Mittel (122) zum Einbringen von Druckmittel in den Hohlraum durch das Einlassrohr und **dadurch** in das offene Ende des Rohrs;
(f) Mittel (122, 124) zum Beenden des Einbringens von Druckmittel entweder nachdem ein vorbestimmter Zeitraum bestimmt ist, oder wenn ein vorbestimmter Fluiddruck in dem Rohr bestimmt wird; und
(g) Mittel (114, 112) zum Bewegen des wenigstens einen Stempels in einer axialen Richtung relativ zu dem Rohr zu dem geschlossenen Ende des Rohrs hin, um an wenigstens einem Abschnitt des offenen Ende des Rohrs anzugreifen und ihn nach innen zu verformen.

10. Vorrichtung nach Anspruch 9, bei welcher die Klemmmittel wenigstens zwei Backen (105) aufweisen, wobei die Backen in einer im wesentlichen zu der Achse des Rohrs (12) senkrechten Richtung beweglich sind, um die Backen um das offene Ende (30) des Rohrs einzuklemmen und den inneren Hohlraum (106) um das offene Ende des Rohrs abzudichten.

11. Vorrichtung nach Anspruch 10, die ferner einen Hydraulikkolben (107) aufweist, der mit jeder Backe (105) in Eingriff zu bringen ist, um die Backen in im wesentlichen zu der Achse des Rohrs (12) senkrechter Richtung zu bewegen.

12. Vorrichtung nach einem der Ansprüche 9 bis 11, die wenigstens zwei Stempel (110) innerhalb des inneren Hohlraums (106) der Klemmmittel (104, 105) aufweist.

13. Vorrichtung nach einem der Ansprüche 9 bis 12, bei welcher der oder jeder Stempel (110) an einer Führungsstange (112) angebracht ist, wobei sich die oder jede Führungsstange durch die Klemmmittel (104, 105) erstrecken und eine im wesentlichen zu der Achse des Rohrs (12) senkrechte Achse haben.

14. Vorrichtung nach einem der Ansprüche 9 bis 13, bei welcher die Mittel zum Bewegen des oder jedes Stempels (110) in axialer Richtung relativ zu dem Rohr (12) zu dem geschlossenen Ende (28) des Rohrs hin einen Hydraulikzylinder (114) aufweisen.

15. Vorrichtung nach einem der Ansprüche 9 bis 14, bei welcher der oder jeder Stempel (110) von dem geschlossenen Ende (28) des Rohrs (12) weg vorgespannt ist.

16. Vorrichtung nach einem der Ansprüche 9 bis 15, bei welcher das Einlassrohr (118) mit einer Durchbohrung (120) in dem oder einem der Stempel (110) verbunden ist.

17. Vorrichtung nach Anspruch 16, bei welcher der oder jeder Stempel (110) an einer Führungsstange (112) angebracht ist, wobei die Durchbohrung (120) in einer der Führungsstangen ist.

18. Vorrichtung nach einem der Ansprüche 9 bis 17, bei welcher die Mittel zum Einbringen von Druckmittel und die Mittel zum Beenden des Einbringens von Druckmittel ein Steuerventil (122) sind.

19. Vorrichtung nach Anspruch 18, die ferner einen in dem inneren Hohlraum (106) positionierten Drucksensor (126) und einen mit dem Drucksensor und dem Steuerventil (122) verbundenen Druckaufnehmer (124) aufweist, wobei der Druckaufnehmer das Steuerventil schließt, wenn der Drucksensor einen vorbestimmten Fluiddruck in dem Hohlraum erfasst.

## Revendications

1. Méthode de chargement d'un tube (12), qui est fermé à une extrémité (28) et ouvert à l'autre extrémité (30), avec un fluide sous pression et de fermeture au moins partielle de l'extrémité ouverte du tube, comprenant les étapes successives consistant à :
(a) positionner le tube sur un poste de travail (102), le poste de travail incluant un moyen de serrage (104, 105) ayant une cavité intérieure (106) dans laquelle se trouve au moins une matrice (110) capable d'effectuer un mouvement dans la direction axiale du tube ;
(b) fermer de manière étanche la cavité du moyen de serrage autour de l'extrémité ouverte du tube ;
(c) introduire le fluide sous pression dans la cavité du moyen de serrage à travers un tuyau d'admission (118) de façon à ce que le fluide sous pression entre dans le tube par l'extrémité ouverte de celui-ci ;
(d) arrêter d'introduire le fluide sous pression soit après une période de temps prédéterminée, soit lorsqu'on a déterminé que la pression de fluide dans le tube atteint une valeur prédéterminée ;
(e) déplacer la au moins une matrice dans une direction axiale par rapport au tube vers l'extrémité fermée du tube pour engager et déformer vers l'intérieur au moins une partie de l'extrémité ouverte du tube ;
(f) desserrer le moyen de serrage du tube ; et
(g) retirer le tube du poste de travail.

2. Méthode selon la revendication 1, dans laquelle le moyen de serrage comprend deux mâchoires (105) ou davantage, dans laquelle l'étape de fermeture étanche consiste à déplacer les mâchoires dans une direction sensiblement perpendiculaire à l'axe du tube (12) pour serrer les mâchoires autour de l'extrémité ouverte (30) du tube, et pour fermer de manière étanche la cavité intérieure (106) autour de l'extrémité ouverte du tube.

3. Méthode selon la revendication 1 ou la revendication 2, dans laquelle l'étape consistant à introduire ou l'étape consistant à arrêter d'introduire sont effectuées par une vanne de commande (122) connectée à une source de fluide sous pression.

4. Méthode selon l'une quelconque des revendications 1 à 3, dans laquelle l'étape consistant à déplacer est effectuée par un cylindre hydraulique (114) qui engage la ou les matrices (110).

5. Méthode selon l'une quelconque des revendications 1 à 4, dans laquelle l'étape consistant à déplacer déforme vers l'intérieur l'extrémité ouverte (30) du tube (12) tout autour de la circonférence de l'extrémité ouverte.

6. Méthode selon la revendication 5, dans laquelle l'étape consistant à déplacer déforme vers l'intérieur l'extrémité ouverte (30) du tube (12) en pliant l'extrémité ouverte avec un angle d'au moins 20 degrés.

7. Méthode selon l'une quelconque des revendications 1 à 4, dans laquelle l'étape consistant à déplacer déforme vers l'intérieur l'extrémité ouverte (30) du tube (12) à des positions prédéterminées pour former des dentelures dans le tube autour de son extrémité ouverte.

8. Méthode selon l'une quelconque des revendications 1 à 7, dans laquelle le tube (12) est le tube extérieur d'un amortisseur hydraulique (10), l'amortisseur hydraulique possédant également un tube intérieur coaxial (14), la chambre (40) formée entre les tubes intérieur et extérieur étant chargée avec un fluide sous pression.

9. Dispositif (100) de chargement d'un tube (12), qui est fermé à une extrémité (28) et ouvert à l'autre extrémité (30), avec un fluide sous pression et de fermeture au moins partielle de l'extrémité ouverte du tube, comprenant :
(a) un poste de travail (102) ;
(b) un moyen de serrage (104, 105) disposé sur le poste de travail, le moyen de serrage ayant une cavité intérieure (106) pouvant former un ajustement étanche autour de l'extrémité ouverte du tube ;
(c) au moins une matrice (110) à l'intérieur de la cavité du moyen de serrage et capable d'effectuer un mouvement dans la direction axiale du tube ;
(d) un tuyau d'admission (118) connecté à la cavité du moyen de serrage ;
(e) un moyen (122) pour introduire le fluide sous pression dans la cavité à travers le tuyau d'entrée et ainsi dans l'extrémité ouverte du tube ;
(f) un moyen (122, 124) pour arrêter d'introduire le fluide sous pression soit après avoir déterminé qu'une période de temps prédéterminée s'est écoulée, soit lorsqu'on a déterminé qu'une pression de fluide dans le tube atteint une valeur prédéterminée; et
(g) un moyen (114, 112) pour déplacer la au moins une matrice dans une direction axiale par rapport au tube vers l'extrémité fermée du tube pour engager et déformer vers l'intérieur au moins une partie de l'extrémité ouverte du tube.

10. Dispositif selon la revendication 9, dans lequel le moyen de serrage comprend au moins deux mâchoires (105), les mâchoires pouvant se déplacer dans une direction sensiblement perpendiculaire à l'axe du tube (12) pour les serrer autour de l'extrémité ouverte (30) du tube, et pour fermer de manière étanche la cavité (106) autour de l'extrémité ouverte du tube.

11. Dispositif selon la revendication 10, comprenant en outre un bélier hydraulique (107) pouvant engager chaque mâchoire (105) pour déplacer les mâchoires dans la direction sensiblement perpendiculaire à l'axe du tube (12).

12. Dispositif selon l'une quelconque des revendications 9 à 11, comprenant au moins deux matrices (110) à l'intérieur de la cavité intérieure (106) du moyen de serrage (104, 105).

13. Dispositif selon l'une quelconque des revendications 9 à 12, dans lequel la ou chaque matrice (110) est montée sur une tige de guidage (112), la ou chaque tige de guidage s'étendant à travers le moyen de serrage (104, 105) et ayant un axe sensiblement perpendiculaire à l'axe du tube (12).

14. Dispositif selon l'une quelconque des revendications 9 à 13, dans lequel le moyen pour déplacer la ou chaque matrice (110) dans la direction axiale par rapport au tube (12) vers l'extrémité fermée (28) du tube comprend un cylindre hydraulique (114).

15. Dispositif selon l'une quelconque des revendications 9 à 14, dans lequel la ou chaque matrice (110) est chargée préliminairement en étant écartée de l'extrémité fermée (28) du tube (12).

16. Dispositif selon l'une quelconque des revendications 9 à 15, dans lequel le tuyau d'admission (118) est connecté à un trou traversant (120) disposé dans la ou dans l'une des matrices (110).

17. Dispositif selon la revendication 16, dans lequel la ou chaque matrice (110) est montée sur une tige de guidage (112), où le trou traversant (120) est disposé dans l'une des tiges de guidage.

18. Dispositif selon l'une quelconque des revendications 9 à 17, dans lequel le moyen pour introduire le fluide sous pression, et le moyen pour arrêter d'introduire le fluide sous pression, est une vanne de commande (122).

19. Dispositif selon la revendication 18, comprenant en outre un détecteur de pression (126) positionné dans la cavité intérieure (106) ; et un capteur de pression (124) connecté au détecteur de pression et à la vanne de commande (122) ; dans lequel le capteur de pression ferme la vanne de commande lorsque le détecteur de pression détecte une pression de fluide prédéterminée dans la cavité.
